(19) Europäisches Patentamt
European Patent Office
Office européen des brevets

(11) Publication number: **0 372 848 A2**

(12) **EUROPEAN PATENT APPLICATION**

(21) Application number: **89312550.0**

(22) Date of filing: **01.12.89**

(51) Int. Cl.5: **C08J 3/03, C11D 3/37, //C08L71/00**

(30) Priority: **02.12.88 GB 8828139**
**22.07.89 GB 8916829**

(43) Date of publication of application:
**13.06.90 Bulletin 90/24**

(84) Designated Contracting States:
**BE DE ES FR GB IT NL**

(71) Applicant: **The British Petroleum Company p.l.c.**
**Britannic House Moor Lane**
**London EC2Y 9BU(GB)**

(72) Inventor: **Callaghan, Ian Charles The British Petroleum Co. p.l.c. Chertsey Road**
**Sunbury-on-Thames Middlesex TW16 7LN(GB)**
Inventor: **Taylor, Alistair Stewart The British Petroleum Co. p.l.c. Chertsey Road**
**Sunbury-on-Thames Middlesex TW16 7LN(GB)**
Inventor: **Keegan, Sandra Ann The British Petroleum Co. p.l.c. Chertsey Road**
**Sunbury-on-Thames Middlesex TW16 7LN(GB)**

(74) Representative: **Ryan, Edward Terrence et al**
**BP INTERNATIONAL LIMITED Patents & Agreements Division Chertsey Road**
**Sunbury-on-Thames Middlesex, TW16 7LN(GB)**

(54) **Emulsion and fabric conditioning compositions based on said emulsions.**

(57) An aqueous emulsion of a perfluoropolyether having a molecular weight in the range 3000 to 8000 is made by agitating the perfloropolyether with a non-oionic non-fluorine-containing surfactant having an HLB value in the range 11.5 to 17. The emulsions may be used in fabric conditioners.

EP 0 372 848 A2

## EMULSIONS AND FABRIC CONDITIONING COMPOSITIONS BASED ON SAID EMULSIONS

The present invention relates to fabric conditioning compositions.

It is known to use compositions to treat fabrics so as to improve various properties, such as the feel and apparent softness of the fabric. In particular it is known to add such compositions to the rinse water after a laundering process. It is disclosed in GB 1 549 180 that fabric conditioning compositions may be modified by the inclusion of certain silicone compounds. Among the benefits obtained from the inclusion of the silicone compounds is said to be improved ease of ironing.

There is a need to find improved fabric softening compositions which give improved ease of ironing.

There have been prior disclosures of fabric treatments using compositions containing quaternary ammonium compounds and organic fluoro compounds. US 3 350 218 discloses a process for treating textiles with quaternary ammonium derivatives of highly fluorinated aliphatic carboxylic acids. The compounds are used to impart water and soil resistance to textiles. There is no suggestion that the compounds can be used in the highly dilute conditions in which fabric conditioners are used after laundering. The compounds are not readily available commercially. Because the compounds are quaternary derivatives of carboxylic acids they will be water soluble so that there is no problem in applying them from aqueous solution.

US 3 468 697 discloses a method for laundering and treating articles using a mixture containing a quaternary ammonium compound and a fluorocarbon derivative. The mixture is used to impart water repellency, stain resistance, and ease of subsequent laundering and ironing. Various compounds are specifically mentioned and among groups referred to in general terms are fluoro derivatives of alcohols, aldehydes, ketones, and esters. Fluoro ethers are not mentioned however.

EP 289 312 discloses microemulsions of perfluoropolyethers. These emulsions also contain hydrocarbon compounds and fluorinated surfactants. The need to use special fluorinated surfactants will increase costs.

EP 250 766 also discloses microemulsions of perfluorocompounds but again requires the presence of a fluorinated surfactant.

EP 196 904 discloses an emulsion of a perfluoropolyether. However the preparation of this emulsion involves the initial preparation of an oil-in-water emulsions into which the perfluoropolyether is added. The necessity to prepare an initial emulsion of an oily phase and water to which the perfluoropolyether is then added is an undesirable complication in the process of dispersing the perfluoropolyether. The need to have an oil phase such as a fatty acid ester or a hydrocarbon is an undesirable restriction on the types of emulsion which can be formed.

An important requirement for fabric conditioning compositions is storage stability. The composition should remain homogeneous and not separate into its components on standing. Any material which is to be used as a laundry fabric conditioner (i.e in the final rinse stage of a washing process) therefore needs to be water-soluble or dispersible. Perfluoropolyethers therefore do not appear to be suitable for use in fabric conditioner compositions.

It would be desirable to find a simple method of preparing stable emulsions of perfluoropolyethers.

We have now found how to make stable emulsions of perfluoropolyethers by a simple method and how to make a fabric conditioner composition, with improved ease of ironing, containing perfluoropolyethers.

According to one aspect of the present invention a process for making an aqueous emulsion of a perfluoropolyether having a molecular weight in the range 3000 to 8000 comprises agitating it with a non-ionic non-fluorine-containing surfactant having an HLB in the range 11.5 to 17 and water.

According to another aspect of the present invention a composition suitable for use as a fabric conditioner and containing a fabric conditioning quaternary ammonium compound is characterised in that it contains a perfluoropolyether having a molecular weight in the range 3000 to 8000 and which has been emulsified with a non-ionic surfactant having an HLB value in the range 11.5 to 17.

The quaternary ammonium compound may be any of the compounds commonly used in fabric conditioning compositions. Such compounds are well-known and are therefore not described in detail. An example of a quaternary ammonium compound which may be used is dimethyldistearylammonium chloride. This is commercialy available from Akzo as "Arquad 2HT" (trade mark).

The perfluoropolyether preferably has a molecular weight in the range 6000 to 8000, more preferably about 7000. A preferred perfluoropolyether is trifluoromethyl-poly (oxydifluoromethylene)-poly(oxy-2-(trifluoromethyl) -difluoromethylene ) trifluoromethyl ether.

The ratio of oxy-2-(trifluoromethyl)-difluoromethylene groups to oxydifluoromethylene groups is preferably greater than 20 and less than 40.

The non-ionic surfactant has an HLB in the range 11.5-17, preferably in the range 11.5-15.

The non-ionic surfactant may be a cheap readily available material. Preferably it contains only carbon, oxygen, and hydrogen.

Among non-ionic surfactants which may be used are ethoxylates of long chain (e.g C8-C22 )linear primary alcohols, and ethoxylates of long chain alkyl phenols, and ethoxylated sorbitan esters.

Preferably the emulsion is prepared in the absence of a hydrocarbon.

The trifluoropolyether is incorporated into the fabric conditioning composition in the form of an aqueous emulsion. The emulsion is prepared from the commercially available perfluoropolyether by agitation with an aqueous solution of the surfactant. The perfluoropolyether may be the major constituent of the mixture to be emulsified. Thus the weight ratio of perfluoropolyether to aqueous solution is preferably greater than 8:1, and preferably less than 50:1 more preferably in the range 20:1 to 45:1, e.g about 40:1.

The concentration of the emulsifier in the emulsion may for example be in the range 0.1 to 3% by weight of the emulsion ( before addition to the fabric condtioning composition).

The concentration of the surfactant in the aqueous solution used to prepare the emulsion may be in the range 2% to 15% by weight of the aqueous solution, for example 7% to 13% by weight.

The fabric conditioning composition containing the perfluoropolyether compound may be prepared by adding the emulsion to a mixture containing the ingredients which are conventional in fabric conditioning compositions, and agitating the resulting mixture.

The quantity of perfluoropolyether (measured as such and not as the emulsion) may for example be in the range 0.1% to 5%, preferably 0.5 to 2%, by weight based on weight of fabric conditioning composition (including water).

The fabric conditioning composition may contain the ingredients commonly present in such compositions, including minor ingredients such as dyes and perfumes.

The invention will now be illustrated by reference to the following experiments in which examples of the invention are identified by numbers and comparative tests, not according to the invention are identified by letters.

## Example 1

An aqueous emulsion of a perfluoropolyether was prepared by adding the perfluoropolyether to an aqueous surfactant solution, and agitating at room temperature using a laboratory mixer under low shear conditions.

The surfactant was an ethoxylate of a C14-C15 linear primary alcohol ethoxylate sold under the designation "Dobanol 45-7" (trade mark) and having an HLB (hydrophile-lipophile balance) of 11.6.

The perfluoropolyether was trifluoromethyl-poly(oxydifluoromethylene)-poly(oxy-2-(trifluoromethyl) - difluoromethylene) trifluoromethyl ether of molecular weight about 7000 sold under the designation "Fomblin YR" (trade mark) by Montefluos S.A. It has the formula

$$CF_3-[(O-\underset{\displaystyle |\atop CF_3}{CF}-CF_2)_n-(O-CF_2)_m]-O-CF_3$$

where n and m are integers such that the ratio of n to m is greater than 20:1 and is less than 40:1.

The aqueous solution of surfactant contained 10% wt/wt of surfactant and the perfluoropolyether was added to it at a weight ratio of perfluoroether to aqueous solution of 18:1. A satisfactory stable emulsion was produced.

## Comparative Test A

An experiment was carried out as in Example 1 except that the surfactant used was an ethoxylated sorbitan trioleate sold under the designation "Tween 85" (trade mark) and having an HLB of 11. A stable emulsion was not produced.

Examples 2 -7

Experiments were carried out as in Example 1 but using different surfactants. The surfactants used are listed in the Table. Stable emulsions were produced.

Comparative Test B

A conventional fabric conditioning composition was prepared with the following composition:

| component | %weight |
|---|---|
| dimethyldistearylammonium chloride | 6.670 |
| alkylimidazoline methosulphate | 1.600 |
| 40% formaldehyde solution | 0.200 |
| opacifier | 0.125 |
| minors | 0.233 |
| water | to balance |

The minor components were perfumes and dyes which had no effect on performance.

Washing and ironing tests

Samples of polyester/cotton shirts were included in bundles of assorted fabrics and washed using a conventional heavy duty washing powder in a Miele washing machine. Identical bundles were used in each test. Fabric conditioner was added at the final rinse stage of the wash at the rate of 4g of the aqueous composition to 1 litre of rinse water. The fabrics were then dried and submitted to an evaluation panel for ironing tests on the shirts.

Example 8

A fabric conditioning composition containing perfluoropolyether was prepared by adding the emulsion made according to Example 2 to the fabric conditioning composition of Test B.

The quantity of emulsion used was sufficient to give a composition containing: perfluoropolyether 0.097% wt/wt non-ionic surfactant 0.0017%wt/wt in addition to the ingredients present in Test B.

The fabric conditioner was tested as In Test B. The panel tests showed a strong preference in respect of ease of ironing for the shirts treated with the composition according to Example 8.

Table

| Experiment | Trade Name | Chemical | HLB |
|---|---|---|---|
| A | Tween85 | ethoxylated sorbitan trioleate | 11 |
| 1 | Dobanol 45-7 | C14-C15 linear primary alcohol ethoxylate | 11.6 |
| 2 | Dobanol 25-7 | C12-C15 linear primary alcohol ethoxylate | 12 |
| 3 | SynperonicNP9 | nonylphenol ethoxylate | 12.8 |
| 4 | Dobanol 25-9 | C12-C15 linear primary alcohol ethoxylate | 13.2 |
| 5 | Tween 21 | ethoxylated sorbitan monolaurate | 13.3 |
| 6 | Brij 78 | stearyl alcohol ethoxylate | 15.3 |
| 7 | SynperonicNP20 | nonylphenol ethoxylate | 16 |

## Claims

1. A process for making an aquous emulsion of a perfluoropolyether having a molecular weight in the range 3000 to 8000 which comprises agitating the perfluoropolyether with a non-ionic non-fluorine-containing surfactant having an HLB in the range 11.5 to 17 and water.

2. A process according to claim 1 wherein the perfluoropolyether has a molecular weight in the range 6000 to 8000.

3. A process according to either of claims 1 or 2 wherein the perfluoropolyether is trifluoromethyl-poly-(oxydifluoromethylene)-poly(oxy-2-(trifluoromethyl)-difluoromethylene) trifluoromethyl ether.

4. A process according to claim 3 wherein the ratio of oxy-2-(trifluoromethyl)-difluoromethylene groups to oxydifluoromethylene is preferably less than 40 and greater than 20.

5. A process according to any one of the preceding claims wherein the non-ionic surfactant has an HLB in the range 11.5-15.

6. A process according to any one of the preceding claims wherein the non-ionic surfactant contains only carbon, hydrogen and oxygen.

7. A process according to any one of the preceding claims wherein the anionic surfactant is an ethoxylate of a $C_8$-$C_{22}$ linear primary alcohol.

8. A process according to any one of claims 1 to 7 wherein the non-ionic surfactant is an ethoxylated $C_8$-$C_{22}$ phenol.

9. A process according to any one of claims 1 to 7 wherein the non-ionic surfactant is an ethoxylated sorbitan oleate.

10. A process according to any one of the preceding claims wherein the perfluoropolyether is agitated with an aqueous solution of the non-ionic surfactant at a weight ratio of perfluoropolyether to aqueous solution of greater than 8:1.

11. A process according to claim 10 wherein the weight ratio is less than 50:1.

12. A process according to claim 11 wherein the weight ratio is in the range 20:1 to 45:1.

13. A process according to any one of the preceding claims wherein the quantity of non-ionic surfactant used is sufficient to give a concentration in the resulting emulsion of 0.1 to 3% by weight of the emulsion.

14. An aqueous composition suitable for use as a fabric conditioner which contains a fabric conditioner quaternary ammonium compound is characterised in that it contains an emulsion of perfluoropolyether prepared by a process according to any one of the preceding claims.

15. A composition according to claim 13 wherein the quantity of perfluoropolyether is in the range 0.1 to 55 based on the weight of fabric conditioning composition.